# FASCICULE DE BREVET EUROPEEN

(11) **EP 0 438 202 B1**
(45) Date de publication et mention de la délivrance du brevet: **18.05.1994**
(21) Numéro de dépôt: 91200081.7
(22) Date de dépôt: 17.01.1991
(51) Int. Cl.: A01C 17/00

(54) **Dispositif pour épandre de la matière épandable**
Vorrichtung zur Ausstreuung eines körnigen Materials
Spreader for spreadable material

(30) Priorité: 19.01.1990 NL 9000139
(43) Date de publication de la demande: 24.07.1991
(60) Demande divisionnaire: 93202991.1
(73) Titulaire: C. van der Lely N.V., NL-3155 PD Maasland (NL)
(72) Inventeur: van den Berg, Karel, NL-2971 BR Bleskensgraaf (NL); van den Waal, Pieter Jacob, NL-3145 LB Maassluis (NL)
(74) Mandataire: Mulder, Herman

(56) Documents cités:
- EP-A- 0 181 308
- DE-A- 3 310 424
- DE-A- 3 641 080
- DE-A- 3 642 502

## Description

Le dispositif en question concerne un dispositif pour épandre de la matière épandable, par exemple des engrais chimiques ou de la semence, muni d'un réservoir pour la matière à épandre, un organe épandeur et un système de dosage, muni d'une unité de mémoire, dans laquelle des données de dosage préprogrammées comportant la relation entre la coulée de masse de la matière à épandre et la position de soupape dans le système de dosage sont stockées, le système de dosage pouvant régler la position de soupape et donc l'amenée de la matière vers l'organe épandeur à l'aide de ces données préprogrammées et des paramètres, qui sont introduits dans l'unité de mémoire et sont obtenus externement et qui déterminent directement la coulée de masse désirée.

Un tel dispositif est connu du DE-A 36 41 080. Parce que dans le dispositif connu la relation entre la coulée de masse et la position de soupape dans l'unité de mémoire est déterminée pour une matière épandable spécifique, c'est nécessaire de corriger cette relation pour autres types de matière épandable. De là on effectue un essai. L'exécution d'un essai signifie l'étalonnage du système de dosage. Après un étalonnage pareil la relation mentionnée peut être corrigée et on peut régler de nouveau directement la position de soupape dans le système de dosage. Quand l'essai n'est pas fait correctement, par exemple parce que dans le réservoir peuvent se trouver des souillures comme des morceaux de papier, ou parce que les éléments méchaniques pour exécuter l'essai ne marchent pas bien, la relation mentionnée est adaptée incorrectement.

Le but de l'invention est d'éviter largement ces désavantages pour mieux et plus précisément épandre la matière.

Conformément à l'invention ce but est atteint, parce que le dispositif, comme celui-ci est décrit ci-dessus, est caractérisé en ce qu'il y a des moyens de comparateur, à l'aide desquels on obtient un signal, qui indique, après avoir fait un essai, que la correction sur la relation entre la coulée de masse et la position de soupape dans l'unité de mémoire, basé sur le résultat de l'essai, est situé hors d'une première valeur limite, qui est introduite auparavant, et que la relation mentionnée peut être insuffisamment précise.

De plus il peut y avoir des autres moyens de comparateur, à l'aide desquels on obtient un autre signal, qui indique, après avoir fait un essai, que la correction sur la relation entre la coulée de masse et la position de soupape dans l'unité de mémoire, basé sur le résultat de l'essai, serait situé hors d'une autre valeur limite plus grande que la valeur limite mentionnée, qui est introduite auparavant, et que la relation mentionnée ne peut pas être corrigée du tout. Les paramètres externes peuvent comprendre entre autres le dosage en unités de poids par unité de surface de la matière à épandre, la largeur d'épandage et la vitesse de l'avancement du tracteur, avec laquelle le dispositif peut être déplacé.

Dans une forme de réalisation avantageuse de l'invention les données de dosage préprogrammées fixent une caractéristique-standard, dans laquelle le rapport entre la position de soupape dans le système dosage et la quantité de matière, coulant du réservoir, par unité de temps est indiquée. Cette caractéristique-standard peut être fixée des caractéristiques correspondantes, qui sont déterminées pour une ou plus de sortes de matière. De plus il y a, conformément à l'invention, des moyens de correction, à l'aide desquels on peut faire des corrections de la caractéristique-standard en provenance des paramètres, qui sont obtenus externement.

Dans une forme de réalisation spéciale le paramètre, qui est obtenu externement et qui représente le dosage réglé en unités de poids par unité de surface, peut être changé pas à pas, alors que les pas sont 1 - 20% et de préférence environ 5% du dosage réglé.

Selon un autre aspect de l'invention il y a des moyens de comparateur supplémentaires, à l'aide desquels le nombre de tours mesuré du disque éjecteur ou des disques éjecteurs de l'organe épandeur est comparé au nombre de tours désiré, qui concorde avec les paramètres, obtenus externement, et à l'aide duquel une indication de faute est provoquée en cas d'absence de concordance dans certaines limites. A ceci le nombre de tours du disque éjecteur ou des disques éjecteurs peut être mesuré avec un détecteur se trouvant sur un disque éjecteur.

Quoique le système de dosage puisse être dirigé électroniquement, il y a de préférence un ordinateur, qui comprend l'unité de mémoire et/ou les moyens de correction et/ou un ou plus des moyens de comparateur nommés.

D'autres objets et caractéristiques de l'invention ressortiront de la description ci-après, en se référant aux dessins ci-annexés, qui représentent, à titre d'exemples non limitatifs, quelques formes de réalisation du dispositif selon l'invention. Sur ces dessins:

La figure 1 représente un diagramme, dans lequel on a représenté des données préprogrammées dans la forme d'une caractéristique-standard.

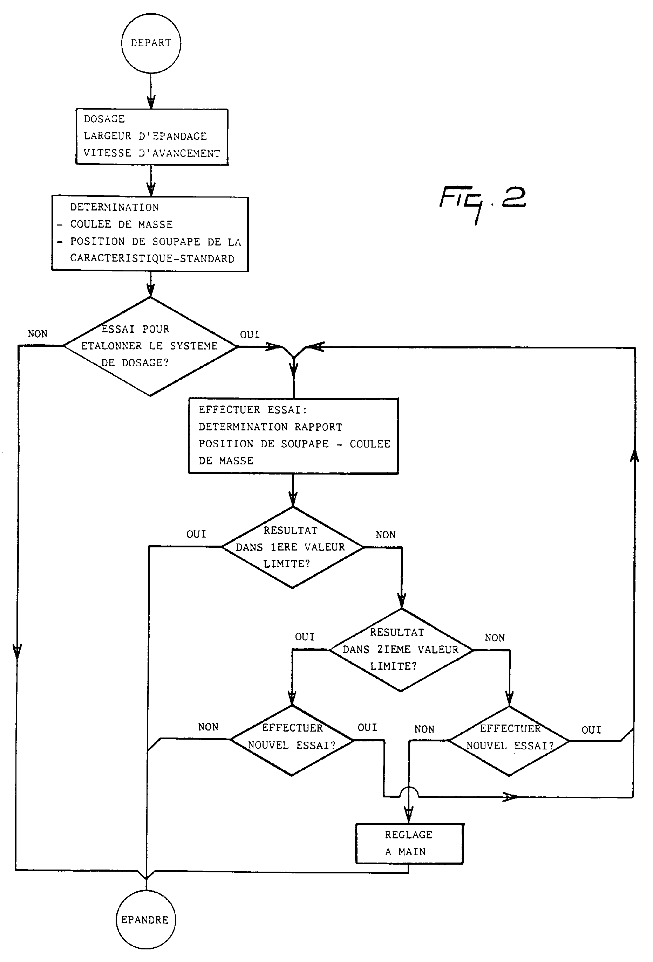

La figure 2 représente un diagramme de courant, à l'aide duquel le fonctionnement du dispositif conforme à l'invention sera expliqué.

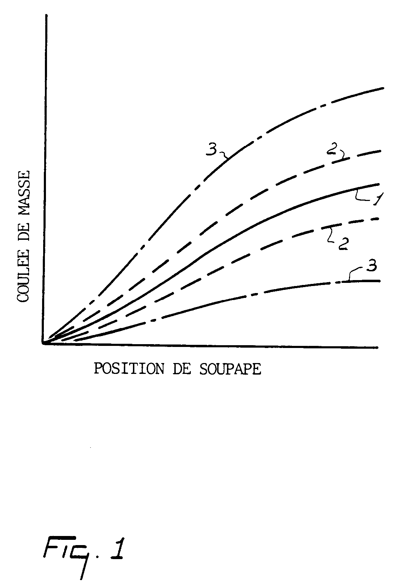

Dans un dispositif pour épandre de la matière épandable, par exemple des engrais chimiques ou de la semence, quel dispositif comprend de la manière usuelle un réservoir pour la matière à épandre, un organe épandeur et un système de dosage, le système de dosage est muni, conformément à l'invention, d'une unité de mémoire, laquelle est réalisée de préférence comme EPROM et dans laquel sont stockées les données de dosage préprogrammées. Le système de dosage peut être dirigé électriquement ou électroniquement, de préférence à l'aide d'un ordinateur, afin qu'avec celui-ci ainsi on puisse régler automatiquement un dosage en vertu des paramètres, obtenus externement, et des données de dosage préprogrammées nommées. Les paramètres, qui sont obtenus externement, sont formés par la largeur d'épandage, la vitesse d'avancement du tracteur, avec laquelle le dispositif peut être déplacé, et le dosage en unités de poids par unité de surface, à nommer ci-après "dose". Les données de dosage préprogrammées déterminent entre autres une caractéristique-standard, qui est indiquée sur la figure 1 avec le chiffre 1 et dans laquelle est représentée le rapport entre la position de soupape dans le système de dosage et la coulée de masse, ceci est la quantité de matière, qui écoule du réservoir, par unité de temps. La coulée de masse est alors déterminée par le produit de la "dose", de la largeur d'épandage et de la vitesse de l'avancement. De la coulée de masse on peut déterminer, à l'aide de la caractéristique-standard, une position de soupape appartenante. Avec un certain choix des paramètres susnommés, qui sont obtenus externement, on peut obtenir de cette manière un réglage précis du système de dosage. Ainsi la matière épandable peut être épandue de manière précise.

A l'origine la caractéristique-standard est établie à l'aide de certaines caractéristiques, qui répondent à une ou à plusieurs sortes de matières. La caractéristique-standard peut être considérée par conséquent comme une sorte de caractéristique moyenne pour différentes matières épandables. Ceci signifie, qu'en cas d'une certaine position de soupape on n'obtiendra pas toujours la coulée de masse, qui est déterminée selon la caractéristique-standard. La caractéristique-standard doit être corrigée par conséquent pour des sortes de matière spécifiques. Pour ceci on fait un essai. Un essai pareil est fait à force de placer sous l'ouverture d'écoulement dans le réservoir une boîte d'essai, qui est destinée pour cela. Ensuite on règle la position de soupape, qui est basée sur les paramètres, obtenus externement, quelle position de soupape est tenue ouverte durant un temps déterminé. Dans ce temps déterminé la quantité de poids de matière, qu'on a laissée passer du réservoir, est recueillie dans la boîte d'essai et pesée. Lorsque la coulée de masse, déterminée de l'essai, diffère de la coulée de masse, comme celle-ci devrait être en vertu de la caractéristique-standard, la caractéristique-standard est donc automatiquement adaptée à la valeur de coulée de masse nouvellement obtenue, à moins qu'en vertu de l'écart constaté on devrait appliquer une correction, qui est située hors d'une valeur limite, qui est introduite auparavant (voir les courbes 2 de la figure 1). Pour l'adaptation automatique de la caractéristique-standard, en cas que les corrections à faire en vertu de l'essai sont petites, il y a un programme d'adaptation, qui est spécialement introduit dans l'ordinateur pour cela. La valeur limite susdite est déterminée par des écarts de la caractéristique-standard d'environ 12%. Le contrôle, si la coulée de masse, qui est déterminée avec l'essai, est située à dans la valeur limite, se fait à l'aide des moyens de comparateur, qui se trouvent dans l'indicateur; à l'aide de ces moyens de comparateur on obtient un signal, qui indique, après avoir fait un essai, que la correction sur la relation entre la coulée de masse et la position de soupape dans l'unité de mémoire, basé sur le résultat de l'essai, est situé hors d'une première valeur limite, qui est introduite auparavant, et que la relation mentionnée peut être insuffisamment précise. Avant que la décision soit prise, si un second essai pareil doit être effectué, on détermine d'abord avec les autres moyens de comparateur, qui se trouvent dans l'indicateur, si les corrections sur la caractéristique-standard sont situées ou non hors d'une autre valeur limite, qui est introduite auparavant (voir les courbes 3 sur la figure 1). L'autre valeur limite susdite est déterminée par des écarts de la caractéristique-standard d'environ 40%. Un autre signal, rendu par les autres moyens de comparateur, indique, après avoir fait un essai, que la correction sur la relation entre la coulée de masse et la position de soupape dans l'unité de mémoire, basé sur le résultat de l'essai, serait situé hors d'une autre valeur limite plus grande que la valeur limite mentionnée, qui est introduite auparavant, et que la relation mentionnée ne peut pas être corrigée du tout. S'il est établi, que les corrections sur la caractéristique-standard sont situées hors de l'autre valeur limite, on indique par cela que la caractéristique-standard n'est pas corrigée et qu'un second essai doit être réalisé, à moins qu'on passe à un réglage à main du système de dosage. Avec le second essai on contrôle au fond le premier essai. C'est à dire que les résultats des deux essais peuvent différer, parce que dans le réservoir peuvent se trouver des souillures, comme par exemple des morceaux de papier ou bien parce que la matière à épandre comporte des mottes, qui empêchent l'écoulement de la matière. S'il parait après l'exécution du second essai, qu'on obtient environ les mêmes résultats que lors de l'exécution du premier essai, la caractéristique-standard est automatiquement adaptée aux résultats du second essai. Après qu'on a obtenu de cette manière une caractéristique-standard, qui est complètement adaptée à la matière d'épandage spécifique, on peut donner le départ à l'épandage propre de la matière. Lors de l'épandage propre, on peut s'écarter de "la dose", qui est réglée auparavant, dépendant de l'état de la parcelle de terre concernante; cet écart peut être changé par étapes de 1 à 20% et de préférence par étapes de 5% de la dose réglée.

## Revendications

1. Dispositif pour épandre de la matière épandable, par exemple des engrais chimiques ou des semences, muni d'un réservoir pour la matière à épandre, un organe épandeur et un système de dosage muni d'une unité de mémoire, dans laquelle des données de dosage préprogrammées comportant la relation entre la coulée de masse de la matière à épandre et la position de soupape dans le système de dosage sont stockées, le système de dosage pouvant régler la position de soupape et donc l'amenée de la matière vers l'organe épandeur à l'aide de ces données préprogrammées et des paramètres, qui sont introduits dans l'unité de mémoire et sont obtenus externement et qui determinent directement la coulée de masse désirée, caractérisé en ce qu'il y a des moyens de comparateur, à l'aide desquels on obtient un signal, qui indique, après avoir fait un essai, que la correction sur la relation entre la coulée de masse et la position de soupape dans l'unité de mémoire, basé sur le résultat de l'essai, est situé hors d'une première valeur limite, qui est introduite auparavant, et que la relation mentionnée peut être insuffisamment précise.

2. Dispositif selon la revendication 1, caractérisé en ce qu'il y a des autres moyens de comparateur, à l'aide desquels on obtient un autre signal, qui indique, après avoir fait un essai, que la correction sur la relation entre la coulée de masse et la position de soupape dans l'unité de mémoire, basé sur le résultat de l'essai, serait situé hors d'une autre valeur limite plus grande que la valeur limite mentionnée, qui est introduite auparavant, et que la relation mentionnée ne peut pas être corrigée du tout.

3. Dispositif selon la revendication 1 ou 2, caractérisé en ce que les paramètres, qui sont obtenus externement, comprennent le dosage en unités de poids par unité de surface de la matière à épandre, la largeur d'épandage et la vitesse d'avancement du tracteur, avec laquelle le dispositif peut être déplacé.

4. Dispositif selon l'une des revendications précédentes, caractérisé en ce que les données de dosage préprogrammées fixent une caractéristique-standard, dans laquelle le rapport entre la position de soupape et la quantité de matière, qui coule du réservoir par unité de temps, est indiqué.

5. Dispositif selon la revendication 4, caractérisé en ce que la caractéristique-standard est déterminée des caractéristiques analogues, qui sont fixées pour une ou plusieurs sortes de matière.

6. Dispositif selon la revendication 4 ou 5, caractérisé en ce qu'il y a des moyens de correction, à l'aide desquels on peut faire des corrections sur la caractéristique-standard par des données. qui sont obtenus d'un essai.

7. Dispositif selon l'une des revendications 4 - 6, caractérisé en ce que la valeur limite est déterminée par des écarts de la caractéristique-standard d'environ 12%.

8. Dispositif selon la revendication 2 et une des revendications 4 - 7, caractérisé en ce que l'autre valeur limite est déterminée par des écarts de la caractéristique-standard d'environ 40%.

9. Dispositif selon l'une des revendications précédentes, caractérisé en ce que le paramètre, qui est obtenu externement et qui représente le dosage réglé en unités de poids par unité de surface, peut être changé par étappes et que les étappes sont 1 - 20% et de préférence 5% du dosage réglé.

10. Dispositif selon l'une des revendications précédentes, caractérisé en ce qu'il y a des moyens de comparateur supplémentaires, à l'aide desquels le nombre de tours mesuré du disque éjecteur ou des disques éjecteurs de l'organe épandeur est comparé au nombre de tours désiré, qui concordent avec les paramètres, obtenus externement, et à l'aide desquels une indication de faute est provoquée en cas d'absence de concordance dans certaines limites.

11. Dispositif selon la revendication 10, caractérisé en ce que le nombre de tours du disque éjecteur ou des disques éjecteurs est mesuré avec un détecteur, qui se trouve sur un disque éjecteur.

12. Dispositif selon l'une des revendications précédentes, caractérisé en ce qu'il y a un ordinateur, qui comprend l'unité de mémoire et/ou les moyens de corrections et/ou un ou plus de moyens de comparateurs nommés.

## Patentansprüche

1. Vorrichtung zum Streuen von streubarem Gut, beispielsweise von Kunstdünger oder Saatgut, mit einem Behälter für das Streugut, einem Streugutverteiler und einem Dosiersystem mit einer Speichereinheit, in der vorprogrammierte Dosierdaten gespeichert sind, die die Relation zwischen dem Materialfluss des Streugutes und der Ventilstellung in dem Dosiersystem enthalten, wobei von dem Dosiersystem die Ventilstellung und folglich die Zufuhr des Gutes zu dem Streugutverteiler mittels dieser vorprogrammierten Daten und mittels Parametern zu steuern ist, die in die Speichereinheit eingegeben und extern ermittelt werden, und die den gewünschten Materialfluss unmittelbar bestimmen, dadurch gekennzeichnet, dass eine Vergleichseinrichtung vorgesehen ist, mittels der ein Signal geliefert wird, das nach Durchführung eines Probelaufs anzeigt, dass die auf der Basis des Ergebnisses des Probelaufs durchgeführte Korrektur der Relation zwischen dem Materialfluss und der Ventilstellung in der Speichereinheit ausserhalb eines ersten Grenzwertes liegt, der zuvor eingegeben wurde, und dass diese Relation ungenügend präzise ist.

2. Vorrichtung nach Anspruch 1, dadurch gekennzeichnet, dass eine weitere Vergleichseinrichtung vorgesehen ist, mittels der ein weiteres Signal geliefert wird, das nach Durchführung eines Probelaufs anzeigt, dass die auf der Basis des Ergebnisses des Probelaufs durchgeführte Korrektur der Relation zwischen dem Materialfluss und der Ventilstellung in der Speichereinheit ausserhalb eines weiteren, oberhalb des genannten Grenzwertes liegenden Grenzwertes liegt, der zuvor eingegeben wurde, und dass diese Relation nicht zu korrigieren ist.

3. Vorrichtung nach Anspruch 1 oder 2, dadurch gekennzeichnet, dass die extern ermittelten Parameter die Dosierung des Streugutes in Gewichtseinheiten pro Flächeneinheit, die Streubreite und die Fahrgeschwindigkeit des Schleppers enthalten, mit dem die Vorrichtung zu verfahren ist.

4. Vorrichtung nach einem der vorhergehenden Ansprüche, dadurch gekennzeichnet, dass die vorprogrammierten Dosierdaten eine Standard-Charakteristik festlegen, die die Relation zwischen der Ventilstellung und der Gutmenge darstellt, die pro Zeiteinheit aus dem Behälter strömt.

5. Vorrichtung nach Anspruch 4, dadurch gekennzeichnet, dass die Standard-Charakteristik durch analoge Charakteristiken bestimmt wird, die für eine oder mehrere Gutarten festgelegt werden.

6. Vorrichtung nach Anspruch 4 oder 5, dadurch gekennzeichnet, dass eine Korrekturvorrichtung vorgesehen ist, mittels der Korrekturen der Standard-Charakteristik durch in einem Probelauf erhaltene Daten durchzuführen sind.

7. Vorrichtung nach einem der Ansprüche 4 bis 6, dadurch gekennzeichnet, dass der Grenzwert durch Abweigungen von ca. 12% von der Standard-Charakteristik bestimmt wird.

8. Vorrichtung nach Anspruch 2 sowie nach einem der Ansprüche 4 bis 7, dadurch gekennzeichnet, dass der weitere Grenzwert durch Abweichungen von ca. 40% von der Standard-Charakteristik bestimmt wird.

9. Vorrichtung nach einem der vorhergehenden Ansprüche, dadurch gekennzeichnet, dass der extern ermittelte Parameter, der die Dosierung in Gewichtseinheiten pro Flächeneinheit betrifft, stufenweise zu verändern ist, und dass die Stufen 1 bis 20% und vorzugsweise 5% der eingestellten Dosierung betragen.

10. Vorrichtung nach einem der vorhergehenden Ansprüche, dadurch gekennzeichnet, dass eine zusätzliche Vergleichseinrichtung vorgesehen ist, mittels der die gemessene Drehzahl der Streuscheibe oder der Streuscheiben der Streuvorrichtung mit der gewünschten Drehzahl verglichen wird, die mit den extern ermittelten Parametern übereinstimmt, und dass mittels der Vergleichseinrichtung bei fehlender Ubereinstimmung innerhalb bestimmter Grenzwerte eine Fehleranzeige ausgelöst wird.

11. Vorrichtung nach Anspruch 10, dadurch gekennzeichnet, dass die Drehzahl der Streuscheibe oder der Streuscheiben mit einem Dektektor gemessen wird, der auf einer Streuscheibe angeordnet ist.

12. Vorrichtung nach einem der vorhergehenden Ansprüche, dadurch gekennzeichnet, dass eine Datenverarbeitungsanlage vorgesehen ist, die die Speichereinheit und/oder die Korrektorvorrichtung und/oder eine oder mehrere der genannten Vergleichseinrichtungen enthält.

## Claims

1. Device for spreading spreadable material, for example chemical fertilizers or seeds, said device being equipped with a reservoir for the material to be spread, a spreading element and a dosing system equipped with a memory unit, stored in which unit there is preprogrammed dosage data including the relationship between the mass flow of the material to be spread and the valve position in the dosing system, with it being possible for the dosing system to regulate the valve position and thus the supply of the material towards the spreading element with the aid of this preprogrammed data and parameters which are input into the memory unit and are obtained externally and which directly determine the desired mass flow, characterised in that there are comparator means which are used to obtain a signal which, after a test has been carried out, indicates that the correction in respect of the relationship between the mass flow and the valve position in the memory unit, based upon the result of the test, is outside a first limiting value previously input and that the relationship mentioned may be insufficiently accurate.

2. Device according to claim 1, characterised in that there are other comparator means which are used to obtain another signal which, after a test has been carried out, indicates that the correction in respect of the relationship between the mass flow and the valve position in the memory unit, based upon the result of the test, would be outside another limiting value which is greater than the limiting value mentioned, previously input, and that the relationship mentioned cannot be corrected at all.

3. Device according to claim 1 or 2, characterised in that the parameters, which are obtained externally, include the dosage in units of weight per unit area of the material to be spread, the spreading width and the speed of forward movement of the tractor, with which the device can be moved.

4. Device according to one of the preceding claims, characterised in that the preprogrammed dosage data fixes a standard characteristic in which the relationship between the valve position and the quantity of material which flows from the reservoir per unit of time is indicated.

5. Device according to claim 4, characterised in that the standard characteristic is determined from analog characteristics which are fixed for one or several types of material.

6. Device according to claim 4 or 5, characterised in that there are correction means with the aid of which it is possible to effect corrections in respect of the standard characteristic using the data obtained from a test.

7. Device according to one of the claims 4 to 6, characterised in that the limiting value is determined by deviations from the standard characteristic of approximately 12%.

8. Device according to claim 2 and one of the claims 4 to 7, characterised in that the other limiting value is determined by deviations from the standard characteristic of approximately 40%.

9. Device according to one of the preceding claims, characterised in that the parameter, which is obtained externally and which represents the regulated dosage in units of weight per unit area, can be changed in stages and in that the stages are 1 - 20 % and preferably 5% of the regulated dosage.

10. Device according to one of the preceding claims, characterised in that there are supplementary comparator means, with the aid of which the measured number of revolutions of the ejector disk or the ejector disks of the spreading element is compared with the desired number of revolutions agreeing with the parameters, obtained externally, and with the aid of which an error indication is brought about in the case of lack of agreement within certain limits.

11. Device according to claim 10, characterised in that the number of revolutions of the ejector disk or the ejector disks is measured with a detector which is located on an ejector disk.

12. Device according to one of the preceding claims, characterised in that there is a computer which comprises the memory unit and/or the correction means and/or one or more'comparator means mentioned.
